# EUROPEAN PATENT SPECIFICATION

(11) **EP 2 110 970 B1**
(45) Date of publication and mention of the grant of the patent: **12.06.2013**
(21) Application number: 08007355.4
(22) Date of filing: 15.04.2008
(51) Int. Cl.: H04B 10/077

(54) **Method for monitoring an optical data transmission line and optical data transmitter**
Verfahren zur Überwachung einer optischen Datenübertragungsleitung und optischer Datensender
Procédé de surveillance d'une ligne de transmission de données optiques et transmetteur de données optiques

(43) Date of publication of application: 21.10.2009
(73) Proprietor: Alcatel Lucent, 75007 Paris (FR)
(72) Inventor: Pfeiffer, Thomas, 70569 Stuttgart (DE); Schmuck, Harald, 71701 Schwieberdingen (DE); Straub, Michael, 75433 Maulbronn (DE); Hehmann, Jörg, 71263 Weil der Stadt (DE)
(74) Representative: Mildner, Volker

(56) References cited:
- EP-A- 1 901 448
- WO-A-02/091634
- US-A1- 2004 223 759

## Description

The invention relates to a method for monitoring an optical data transmission line according to the preamble of claim 1, to an optical data transmitter, to an optical data receiver, and to an optical data station.

Methods and apparatus' of this kind are generally known in the art, e.g. from WO 92/11710 A1.

It is expected that future optical transceivers will comprise embedded OTDR measuring technique (OTDR = Optical Time Domain Reflectometry). This shall allow the monitoring of network fiber plants during the data transmission. In continuously operating networks like the OLT side in PONs (OLT = Optical Line Termination; PON = Passive Optical Network) or in most point-to-point networks, it is known to apply a sine wave measuring technique. At top of the data stream a swept sine wave signal is added representing the stimulus for generating Rayleigh backscattering from the fiber link. Such reflected signal than can be used to check the properties of such link.

The signal backscattered when using a single sine wave signal includes less information than from an impulse response. Therefor a series of such measurements with different frequencies of the sine wave signal is made to exclude ambiguities resulting from the periodicities of the respective individual measurements. This can be done by transforming back from the frequency domain into the time domain that here is equivalent to the distance domain. We consider using frequencies from 1 kilocycle per second to 10 Megacycles per second. The measuring signal thus is swept (in steps) between these values.

It is easy to see that such situation not only exists in connection with embedded OTDR measuring techniques or in the access area. The solution given below therefor is not restricted thereto.

On the one hand generation and application of a sine wave signal in an otherwise digital surrounding is unwanted; and sweeping such signal is time-consuming. On the other hand a special measuring task to be performed when monitoring a line may demand for a measuring signal with suitable properties.

The object underlying the invention is to provide a method for monitoring an optical data transmission line adaptable to a given measuring task and devices for performing such method.

According to the invention this object is performed by a method according to the teaching of claim 1, by an optical data transmitter according to the teaching of claim 2, an optical data receiver according to the teaching of claim 3, and an optical data station according to the teaching of claim 4.

Further embodiments of the invention are to be found in the description.

In the following the invention will be further described with the aid of the accompanying drawings:
- Figure 1: shows an optical data signal with superimposed digital measuring signal as used in an embodiment of the method according to the invention.
- Figure 2: shows an optical data transmitter according to an embodiment of the invention.

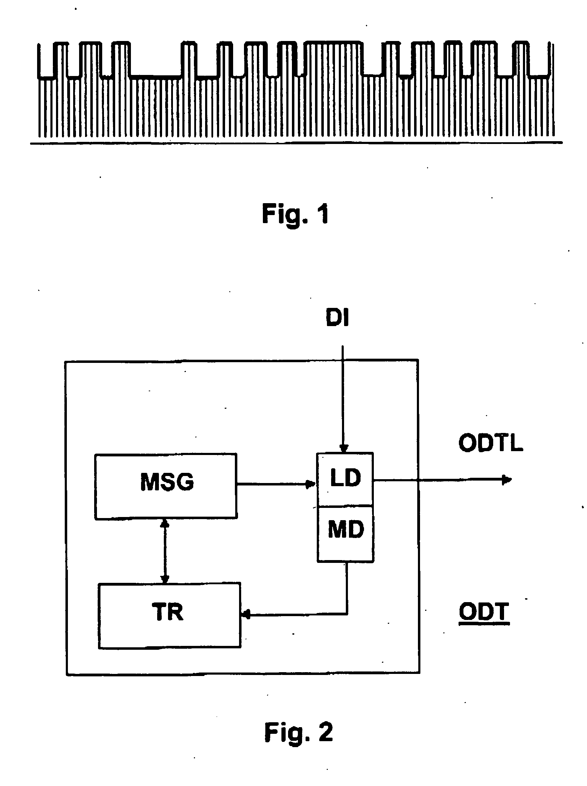

Figure 1 shows a signal as used in an embodiment of the method according to the invention. Basically it is an optical data signal, the data rate of which is high compared to the data rate of the measuring signal. So the optical data signal is depicted only as a vertically striped area. It is superimposed by a digital measuring signal. The illustration here is only a very raw one. In practice the amplitude of the digital measuring signal will be much lower compared to the amplitude of the digital data signal. A share of about 5 % of the overall signal for the measuring signal should be suitable.

For test purposes the use of pseudo random noise signals is widespread. Such signals are easily to be generated and have a more or less uniform spectral behavior.

In order to adapt the measuring signal to a given measuring task according to the invention the bit sequence is chosen differently.

A signal with continuously changing ones and zeros represents a spectrum with mainly one frequency accompanied by its harmonics with lower amplitude. By always combining two or more ones and zeros the spectrum will be shifted to lower frequencies. In shifting the basic rate of the digital measuring signal a shift of the spectrum is achievable. Another possibility is to provide a measuring signal with mainly equal distribution in the spectrum but with one emphasized spectral line. Also a Gaussian behavior of the spectrum may be wanted.

Figure 2 shows an example of an optical data transmitter ODT according to the invention.

The optical data transmitter ODT includes a measuring signal generator MSG, a laser diode LD, a monitoring diode MD, and a test receiver TR.

A data input DI for modulating the laser diode LD and an optical data transmission line ODTL for outputting the thus modulated laser light as the optical data signal is shown, too.

The optical data transmission line ODTL will also carry the superimposed measuring signal and the backscattered answer of

Input and output means for controlling the measuring task and for outputting the measuring result are foreseen, but not shown.

The measuring signal generator MSG generates a digital measuring signal as mentioned above. This signal together with the data signal from the data input DI will modulate the laser diode during measuring periods.

In this example the monitoring diode MD is attached to the laser diode LD such that the backscattered light is received by the monitoring diode and thus can be analyzed by the test receiver TR. A connection between the measuring signal generator MSG and the test receiver TR is foreseen for control purposes.

The embodiment as shown in figure 2 is preferably used when a pair of unidirectional optical lines is used for line transmission. Otherwise anyway an optical receiver is coupled to the optical transmission line ODTL and can be combined with an appropriate test receiver. In such case normally an optical data transmitter and an optical data receiver are combined to an optical data station.

## Claims

1. Method for monitoring an optical data transmission line (ODTL), in which method to a data signal to be transmitted and having a constant amplitude a measuring signal is superimposed and in which method a resulting backscattered signal is evaluated (TR) for monitoring, **characterized by** a step of choosing a suitable digital bit sequence as the superimposed measuring signal for adapting the spectral properties of the superimposed measuring signal to a respective measuring task.

2. Optical data transmitter (ODT), **characterized in** comprising means (MSG, TR) for carrying out the method according to claim 1.

## Patentansprüche

1. Verfahren zur Überwachung einer optischen Datenübertragungsleitung (ODTL), wobei einem zu übertragenden Datensignal mit einer konstanten Amplitude ein Messsignal überlagert wird, und wobei ein sich daraus ergebendes rückgestreutes Signal zur Überwachung bewertet (TR) wird, **gekennzeichnet durch** einen Schritt des Auswählens einer geeigneten digitalen Bitfolge als das überlagerte Messsignal, um die spektralen Eigenschaften des überlagerten Messsignals an einen entsprechenden Messvorgang anzupassen.

2. Optischer Datensender (ODT), **dadurch gekennzeichnet, dass** er Mittel (MSG, TR) zum Durchführen des Verfahrens gemäß Abschnitt 1 umfasst.

## Revendications

1. Procédé de surveillance d'une ligne de transmission de données optiques (ODTL), dans lequel un signal de mesure est superposé à un signal de données à transmettre et présentant une amplitude constante et dans lequel un signal rétrodiffusé résultant est évalué (TR) afin d'être surveillé, **caractérisé par** une étape de choix d'une séquence de bits numériques appropriée comme signal de mesure superposé pour adapter les propriétés spectrales du signal de mesure superposé à une tâche de mesure respective.

2. Transmetteur de données optiques (ODT), **caractérisé en ce qu'il** comprend des moyens (MSG, TR) pour mettre en oeuvre le procédé selon la revendication 1.
